# EUROPÄISCHE PATENTSCHRIFT

(11) **EP 1 136 196 B1**
(45) Veröffentlichungstag und Bekanntmachung des Hinweises auf die Patenterteilung: **02.11.2006**
(21) Anmeldenummer: 01106908.5
(22) Anmeldetag: 20.03.2001
(51) Int. Cl.: B25J 19/00

(54) **Verfahren und Vorrichtung zur Klimatisierung von Robotern**
Method and device for temperature controlling of robots
Procédé et dispositif pour la climatisation de robots

(30) Priorität: 21.03.2000 DE 10013721
(43) Veröffentlichungstag der Anmeldung: 26.09.2001
(73) Patentinhaber: Battenberg, Günther, 35043 Marburg (DE)
(72) Erfinder: Battenberg, Günther, 35043 Marburg (DE)
(74) Vertreter: Olbricht, Karl Heinrich

(56) Entgegenhaltungen:
- EP-A- 0 019 596
- EP-A- 0 138 461
- EP-A- 0 203 202
- US-A- 5 345 480
- US-A- 5 938 806
- PATENT ABSTRACTS OF JAPAN vol. 017, no. 410 (M-1455), 30. Juli 1993 (1993-07-30) & JP 05 084691 A (SHIN MEIWA IND CO LTD), 6. April 1993 (1993-04-06)
- PATENT ABSTRACTS OF JAPAN Bd. 1998, Nr. 01, 30. Januar 1998 (1998-01-30) -& JP 09 254076 A (FANUC LTD), 30. September 1997 (1997-09-30)

## Beschreibung

Die Erfindung betrifft ein Verfahren zur Klimatisierung von Robotern gemäß dem Oberbegriff von Anspruch 1 sowie eine Vorrichtung gemäß dem Oberbegriff von Anspruch 8.

Roboter werden für die Ausführung der unterschiedlichsten Fertigungs-, Handhabungs-, Montage- und Betätigungsaufgaben herangezogen. Sie besitzen beispielsweise einen um mehrere Achsen dreh- und/oder schwenkbaren Roboterarm, der zentrisch auf einem Roboterfuß, z.B. einer Dreh- oder Schwenkbasis, montiert ist. Das freie Ende des motorisch, hydraulisch oder pneumatisch angetriebenen Roboterarms trägt einen Effektor, der mittels eines frei programmierbaren Steuerprogramms im Arbeitsraum bewegt werden kann. Je nach Art der auszuführenden Tätigkeiten verwendet man als Effektor ein Tastmittel, einen Greifer, ein Werkzeug, ein Meßmittel o.dgl., welches bei Bedarf einem automatischen oder manuellen Wechselsystem zugeordnet sein kann.

Der typische Arbeitstemperaturbereich eines Roboters liegt zwischen 0 °C und +40 °C, was für zahlreiche Anwendungsgebiete ausreichend ist. In verschiedenen Industriebereichen liegen jedoch weit höhere bzw. niedrigere Temperaturen vor, so daß ein herkömmlicher Roboter nicht mehr eingesetzt werden kann. Beispielsweise fordert die Automobilindustrie in Prüf- und Testvorschriften für Automobilteile die Durchführung von Einsatz- und Funktionsprüfungen in Temperaturbereichen zwischen -40 °C und +85 °C. Eine zusätzliche Forderung besteht zumeist in einem vollständigen Fahrzeugtest, d.h. der Roboter muß zusammen mit dem zu testenden Fahrzeug in einer Klimakammer installiert werden. Dies ist jedoch nur mit speziell ausgelegten Robotern zu realisieren, die meist sehr teuer in der Anschaffung sind. Ständig steigende Typenvielfalt, sinkende Losgrößen und kürzere Prozeßzyklen machen derartige Investitionen daher oft unrentabel.

US-A-5 345 480 offenbart eine doppelwandige Kühlvorrichtung für Roboter, die in einem Neutronen-Reaktor eingesetzt werden. Der Roboter hat einen Roboterarm mit drei starren Armabschnitten, die Ober zwei Gelenke miteinander verbunden sind. Jeder Armabschnitt trägt einen starren Behälter, der über je eine Zuführleitung mit Kühlgas versorgt wird. Zwischen den Behältern sind zwei flexible Federbalge angeordnet, die den Bereich der Gelenke abdichten. Innerhalb eines jeden Behälters ist eine innere Kammer und eine äußere Kammer ausgebildet, wobei das Kühlgas zunächst in die innere Kammer eingeleitet wird. Von dort aus gelangt es durch eine Überströmöffnung hindurch in die äußere Kammer und von dort über eine weitere Öffnung in den Federblag. Jeder Federblag ist über eine separate Rückführleitung mit einem Verteiler verbunden, der das verbrauchte Kühlgas sammelt und einem Kühlgerät zuführt.

Ein solcher Aufbau ist insgesamt aufwendig und teuer, weil jeder Behälter einzeln über je eine separate Leitung mit Kühlgas versorgt werden muß. Das verbrauchte Gas wird über ebenso viele Leitungen wieder abgeführt, wobei alle Leitungen separat abzudichten sind. Der Montage- und Wartungsaufwand ist entsprechend hoch. Hinzu kommt, daß jeder Kühlbehälter dichtend auf seinem zugeordneten Armabschnitt sitzen muß und damit exakt an dessen Abmessungen anzupassen ist. Eine anderweitige Verwendung der Kühlvorrichtung -z.B. an einem Roboter mit abweichenden Abmessungen - ist nicht möglich.

Von Nachteil ist ferner, daß nur die Abschnitte des Roboterarms wirksam gekühlt werden, die von den starren Behältern umschlossen sind. Alle übrigen Abschnitte, insbesondere die Gelenke werden lediglich von einfachen Federbalgen nach außen abgeschirmt und von dem bereits verbrauchten Kühlgas aus den starren Behältern umströmt bevor das Gas in den Kühlkreislauf zurückgeführt wird. Ein wirksamer Kühleffekt läßt sich damit nur bedingt erreichen.

JP 09 254 076 A offenbart ein Verfahren zur Klimatisierung eines Roboters, der innerhalb einer doppelwandigen Umhüllung angeordnet ist, wobei zwischen einer Innenhülle und einer Außenhülle ein Isolierraum ausgebildet ist. Der Roboter wird innerhalb der ersten Umhüllung von Luft umströmt, die über ein Rohr außerhalb eines Arbeitsraumes abgesaugt wird. Von dem Innenraum aus gelangt die Luft über einen Überströmbereich in den Isolierraum, wo sie zwischen der Außenhülle und der Innenhülle zurückströmt Ein Abluftrohr gibt die Luft wieder an die Umgebung des Arbeitsraumes ab.

Von Nachteil hierbei ist, daß die Klimatisierung des Roboters unmittelbar von den Temperaturbedingungen der Umgebung abhängig ist. Eine Anpassung der Temperatur der angesaugten Luft an die notwendige Betriebstemperatur des Roboters ist nicht möglich und auch nicht vorgesehen

Ziel der Erfindung ist es, unter Überwindung der Nachteile des Standes der Technik, einen herkömmlichen Roboter innerhalb einer Klimakammer unabhängig von den äußeren Temperaturbedingungen nutzen zu können und den Roboter mit Hilfe des Strömungsmediums auf einer für den Roboter verträglichen Temperatur zu halten. Die Klimatisierung soll dabei mit einfachen Mitteln flexibel und kostengünstig durchführbar bzw. realisierbar sein, ohne jedoch die Klimaverhältnisse in der Klimakammer wesentlich zu beeinträchtigen.

Hauptmerkmale der Erfindung sind im kennzeichnenden Teil der Ansprüche 1 und 8 angegeben. Ausgestaltungen sind Gegenstand der Ansprüche 2 bis 7 und 9 bis 16.

Bei einem Verfahren zur Klimatisierung von Robotern, bei welchem jeder Roboter innerhalb einer ersten Umhüllung von einem Strömungsmedium umströmt wird, das Strömungsmedium von der ersten Umhüllung in eine diese umgebende zweite Umhüllung geleitet wird, die erste Umhüllung innerhalb der zweiten Umhüllung von dem Strömungsmedium umströmt wird, das Strömungsmedium aus der zweiten Umhüllung abgeführt wird, und das aus der zweiten Umhüllung abgeführte Strömungsmedium auf eine im Bereich der Betriebstemperatur des zu klimatisierenden Roboters liegende Temperatur gebracht und anschließend in die erste Umhüllung zurückgeleitet wird,
■ sieht die Erfindung vor, daß das Strömungsmedium vor dem Einströmen in die erste Umhüllung in einem Wärmetauscher auf die im Bereich der Betriebstemperatur des zu klimatisierenden Roboters liegende Temperatur gebracht wird, und
■ daß der Wärmetauscher zur Einstellung der Temperatur des Strömungsmediums mit einem gasförmigen oder flüssigen Trägermedium beaufschlagt wird.
■ wobei das Trägermedium in einer von dem Wärmetauscher separaten Kühl- und/oder Heizvorrichtung auf eine für die Einstellung der Temperatur des Strömungsmediums erforderliche Temperatur gebracht wird.

Das Strömungsmedium hält den Roboter in der ersten inneren Umhüllung unabhängig von den äußeren Temperaturbedingungen auf einer der Betriebstemperatur entsprechenden und damit für den Roboter verträglichen Temperatur, während das zwischen der inneren Umhüllung und der zweiten äußeren Hülle strömende Medium die innere Hülle und die darin herrschende Temperatur gegenüber der äußeren Umgebung weitestgehend abschirmt. Dadurch ist es möglich, einen herkömmlichen Roboter in einer Klimakammer selbst unter extremen Temperaturbedingungen einzusetzen. Aufwendige und teure Veränderungen am Roboter sind nicht erforderlich. Dieser wird mit Hilfe des temperierten Strömungsmediums auf einer für ihn verträglichen Temperatur gehalten, ohne daß dadurch die in der Umgebung herrschenden Klimabedingungen merklich beeinträchtigt werden.

Ein weiterer Vorteil besteht darin, daß Wärmetauscher kostengünstig in der Anschaffung und leicht zu handhaben sind. Ferner lassen sich der Wärmetauscher und die Kühl- bzw. Heizvorrichtung bei Bedarf getrennt voneinander aufstellen, d.h. man kann die Kühl-und/oder Heizvorrichtung beispielsweise auch außerhalb einer Klimakammer anordnen, während sich der Wärmetauscher zusammen mit den Umhüllungen in der Klimakammer befindet. Diese Flexibilität ist insbesondere dann von Vorteil, wenn in der Klimakammer oder in einem darin zu testenden Objekt nur wenig Platz vorhanden ist.

Während das Strömungsmedium den Roboter innerhalb der ersten inneren Umhüllung auf einer der Betriebstemperatur entsprechenden Temperatur hält, schirmt das zwischen der inneren Umhüllung und der zweiten äußeren Hülle rückströmende Medium die innere Hülle und die darin herrschende Temperatur gegenüber der in der Klimakammer herrschenden Temperatur weitestgehend ab. Die in der Klimakammer vorgegebenen Bedingungen werden dadurch kaum beeinträchtigt.

Besonders günstige klimatische Verhältnisse erzielt man durch die Maßnahme von Anspruch 2, wenn nämlich die Strömungsrichtung des Strömungsmediums in der ersten Umhüllung und die Strömungsrichtung des Strömungsmediums in der zweiten Umhüllung im wesentlichen entgegengesetzt verlaufen. Dieses Gegenstromprinzip läßt sich beispielsweise dadurch realisieren, daß das Strömungsmedium laut Anspruch 3 in zumindest einem räumlich begrenzten Überströmbereich von der ersten Umhüllung in die zweite Umhüllung übergeführt wird, wobei der Überströmbereich nach Anspruch 4 bevorzugt in einem Rand- und/oder Endbereich der ersten Umhüllung liegen kann, beispielsweise im Bereich eines an den Roboter anschließbaren Effektors (Anspruch 5). Anspruch 6 sieht zudem vor, daß der Überströmbereich in der Größe veränderbar ist, so daß die Kühl- bzw. Wärmeleistung über die Strömungsverhältnisse regelbar ist Damit ist stets eine optimale Temperierung des Roboters gewährleistet

Das Strömungsmedium ist in der Ausbildung von Anspruch 7 Luft, die eine ebenso einfache wie sichere Prozeßführung ermöglicht. Man kann aber auch ein Schutzgas oder ein anderes gasförmiges Medium verwenden. Da das System in sich abgeschlossen ist, kann kein Medium nach außen dringen.

Neben dem Verfahren sieht die Erfindung laut Anspruch 8 eine Vorrichtung vor, mit einer jeden Roboter umgebenden ersten Umhüllung und mit einer die erste Umhüllung umgebenden zweiten Umhüllung, wobei die erste Umhüllung in wenigstens einem räumlich begrenzten Bereich Überströmöffnungen aufweist, durch die ein den bzw. die Roboter innerhalb der ersten Umhüllung umströmendes Strömungsmedium von der ersten Umhüllung in die zweite Umhüllung gelangt. Demgegenüber ist vorgesehen, daß die Vorrichtung eine Zuführleitung, einen Wärmetauscher, eine Abführleitung, ein gasförmiges oder flüssiges Trägermedium und eine von dem Wärmetauscher separate Kühl- und/oder Heizvorrichtung aufweist,
■ wobei das der ersten Umhüllung über die Zuführleitung zuführbare Strömungsmedium mittels des Wärmetauschers auf eine im Bereich der Betriebstemperatur des zu klimatisierenden Roboters liegende Temperatur bringbar ist,
■ wobei das innerhalb der zweiten Umhüllung die erste Umhüllung umströmende Strömungsmedium aus der zweiten Umhüllung über die Abführleitung abführbar und über den Wärmetauscher und die Zuführleitung der ersten Umhüllung zuführbar ist,
■ wobei der Wärmetauscher zur Einstellung der Temperatur des Strömungsmediums mit dem gasförmigen oder flüssigen Trägermedium beaufschlagbar ist, und
■ wobei das Trägermedium in der von dem Wärmetauscher separaten Kühl- und/oder Heizvorrichtung auf eine für die Einstellung der Temperatur des Strömungsmediums erforderliche Temperatur bringbar ist.

Dadurch ist es möglich, die Temperatur des Strömungsmediums stets auf eine für den Roboter optimale Temperatur zu bringen, unabhängig davon, welche Temperaturbedingungen in der Klimakammer oder in deren Umgebung herrschen.

Der Wärmetauscher ist kostengünstig und einfach zu handhaben. Er läßt sich separat von der Kühl- bzw. Heizvorrichtung aufstellen und über die Zu- und Abführleitung rasch und bequem mit den Umhüllungen verbinden, was immer dann von Vorteil ist, wenn in der Klimakammer oder in einem darin zu testenden Objekt nur wenig Platz vorhanden ist. Zudem kann man die meist großvolumigen Verbindungsleitungen zwischen dem Wärmetauscher und den Umhüllungen gegenüber den leichter zu isolierenden Versorgungsleitungen für das Trägermedium besonders kurz ausbilden, um die Kilmaverhältnisse möglichst wenig zu beeinträchtigen. Ferner wird der Robotereinsatz durch die Versorgungsleitungen nicht behindert.

Vorteilhafte Ausgestaltungen der Vorrichtung sind Gegenstand der Ansprüche 9 bis 16. So ist auch bei der Vorrichtung das Gegenstromprinzip vorgesehen, wobei die Umhüllungen und der Wärmetauscher ein gegenüber der Umgebung in sich geschlossenes System bilden, welches innerhalb einer Klimakammer angeordnet sein kann, während die über Leitungen mit dem Wärmetauscher verbundene Kühl- und/oder Heizvorrichtung außerhalb der Klimakammer liegt. Insgesamt erreicht man mit einfachen und kostengünstigen Mitteln eine Erweiterung des Klimabereichs für den Einsatz von Robotern herkömmlicher Bauart.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer Vorrichtung zum Klimatisieren von Robotern,
- Fig. 2: eine Seitenansicht einer Vorrichtung zum Klimatisieren von Robotern ohne innere und äußere Hülle, teilweise im Schnitt und
- Fig. 3: eine Draufsicht auf die Vorrichtung von Fig. 2.

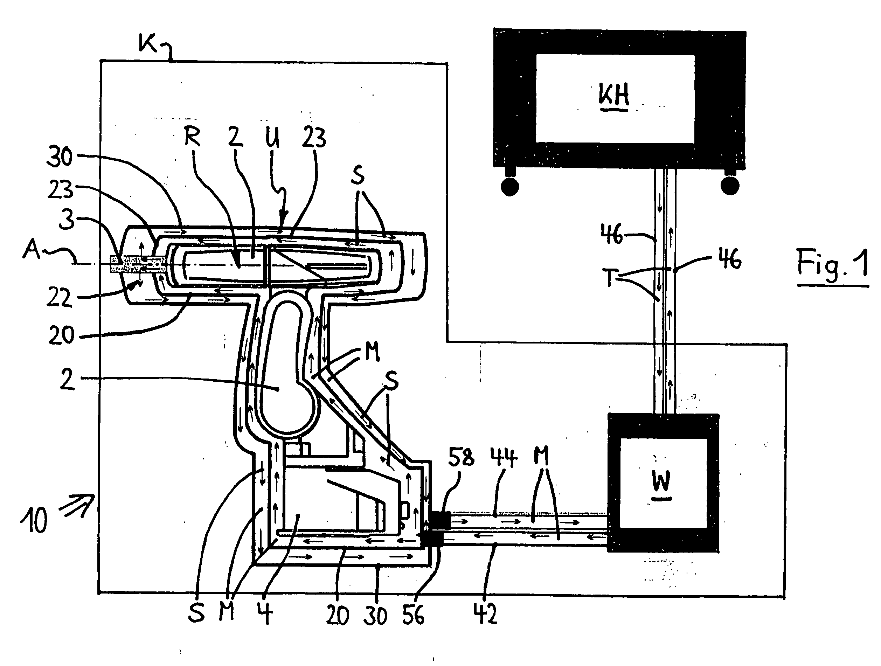

Die in Fig. 1 allgemein mit 10 bezeichnete Vorrichtung zum Klimatisieren von Robotern R besteht aus einer den Roboter R umschließenden doppelwandigen Umhüllung U, einem über Zu- und Abführleitungen 42, 44' mit der Umhüllung U verbundenen Wärmetauscher W sowie einer über Leitungen 46 an den Wärmetauscher W angeschlossenen Heiz- und/oder Kühlvorrichtung KH. Die Umhüllung U, der darin angeordnete Roboter R und der Wärmetauscher W sind gemeinsam in einer Klimakammer K aufgebaut, in beispielsweise der zur Durchführung von Fahrzeugtests extreme Temperaturbedingungen erzeugt werden können, z.B. im Bereich zwischen -40 °C und +85 °C. Die Heiz- bzw. Kühlvorrichtung KH steht außerhalb der Klimakammer K, um einem durch den Wärmetauscher W und die Umhüllung U durchleitbaren Strömungsmedium M, vorzugsweise Luft, je nach gewünschter Roboter-Temperatur Wärmeenergie zuzuführen oder zu entziehen.

Der für die Durchführung der erforderlichen Tests verwendete Roboter R ist ein handelsüblicher Roboter mit einem um mehrere Achsen dreh- und schwenkbaren Roboterarm 2, der zentrisch auf einem Drehsockel 4 montiert ist. Das freie Ende 3 des elektro-motorisch angetriebenen Roboterarms 2 trägt einen (nicht dargestellten) Effektor, beispielsweise ein Tastmittel, einen Greifer, ein Werkzeug oder ein Meßmittel, der zur Ausführung definierter Aufgaben mittels eines frei programmierbaren Steuerprogramms im Arbeitsraum, vorliegend der Klimakammer K oder einem (nicht dargestellten) Fahrzeug, frei bewegt werden kann.

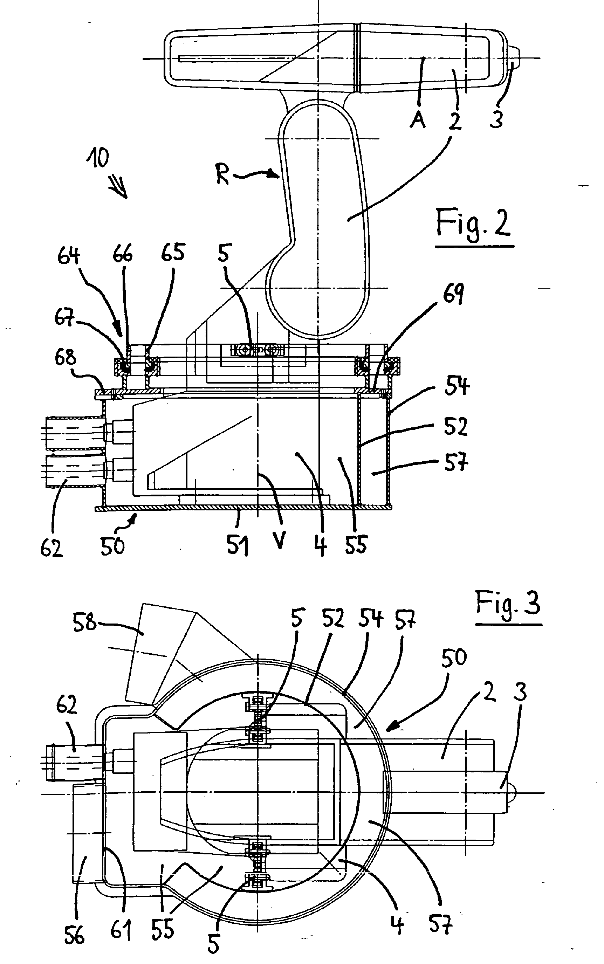

Die den Roboter R umschließende doppelwandige Umhüllung U weist, wie Fig. 2 und 3 zeigt, ein den Roboter-Drehsockel 4 im wesentlichen konzentrisch umschließendes, doppelwandiges Sockelgehäuse 50 auf, an dessen Innenwandung 52 eine den Roboter R unmittelbar umschließende (in den Fig. 2 und 3 nicht sichtbare) erste Hülle 20 und an dessen Außenwandung 54 eine die erste innere Hülle 20 umschließende (in den Fig. 2 und 3 ebenfalls abgenommene) zweite Hülle 30 luftdicht angeschlossen ist. Die Innenwandung 52 des Sockelgehäuses 50 begrenzt zusammen mit einem geschlossenen Boden 51 eine innere Zuluftkammer 55, die über ein Zuluftrohr 56 mit der Zuführleitung 42 des Wärmetauschers W strömungsverbunden ist. Zwischen der Innenwandung 52 und der Außenwandung 54 des Sockelgehäuses 50 ist eine Abluftkammer 57 ausgebildet, die seitlich mit einem Abluftrohr 58 versehen ist, das über die Abluftleitung 44 an den Wärmetauscher W angeschlossen ist. Neben dem Zuluftrohr 56 sind in einer Rückwand 61 des Sockelgehäuses 50 Rohrdurchführungen 62 vorgesehen. Diese dienen der luftdichten Durchführung (nicht gezeigter) Anschlußkabel für den Roboter R in die Umhüllung U.

Während der nach oben aus dem starren Sockelgehäuse 50 herausragende Roboterarm 2 von den bevorzugt aus elastischem Material gefertigten Hüllen 20, 30 umschlossen ist, liegt der am freien Ende 3 des Roboterarms 2 montierbare Effektor außerhalb der Umhüllung U, beispielsweise indem die Hüllen 20, 30 drehbar mit dem freien Ende 3 des Roboterarms 2 verbunden sind. Dadurch wird der stets frei zugängliche Effektor in seinen Dreh- und Kippbewegungen durch die elastischen Hüllen 20, 30 nicht begrenzt. Die programmgemäß vorgesehenen Handhabungen oder Arbeiten lassen sich widerstandsfrei und präzise auch um einen Drehwinkel von 360° ausführen. In einer bevorzugten Ausführungsform werden die Hüllen 20, 30 umfangsseitig auf je eine drehbar um eine Achse A des Roboterarms 2 gelagerte (nicht gezeichnete) Flanschscheibe aufgespannt, die - wie in Fig. 1 angedeutet - zweckmäßig beabstandet hintereinander liegen. Die äußere Hülle 30 kann damit die innere Hülle 20 vollständig umschließen.

Damit auch die Drehbewegung des Drehsockels 4 um dessen Vertikalachse V nicht durch die Hüllen 20, 30 behindert wird, sind letztere über einen Drehflansch 64 mit dem Sockelgehäuse 50 verbunden. Der Drehflansch 64 hat einen Innenflansch 65 zur Festlegung der Innenhülle 20 sowie einen Außenflansch 66 zur Aufnahme der Außenhülle 30. Er ist mittels Kupplungen 5 an den Drehsockel 4 des Roboters R gekoppelt und mittels einer Gleitringdichtung 67 gegenüber einem auf der Innen- und Außenwandung 52, 54 des Sockelgehäuses 50 aufgeschweißten Ringdeckel 68 abgedichtet. Damit die Abluftkammer 57 mit der äußeren Hülle 30 in Strömungsverbindung steht, sind in dem Deckel 68 längliche Durchbrüche 69 vorgesehen.

Bewegt sich der Roboter R innerhalb der Umhüllung U, wird durch die Kupplungen 5 jede vertikale Drehbewegung des Roboters R automatisch auf den Drehflansch 64 und damit auf die Hüllen 20, 30 übertragen. Letztere folgen der Drehbewegung des Roboters R bzw. des Roboterarms 2, ohne sich zu verformen oder dessen Bewegungsumfang einzuschränken, d.h. auch Drehbewegungen um 360° sind problemlos möglich. Bei allen übrigen Armbewegungen gibt die Umhüllung U aufgrund ihrer Elastizität nach, so daß der Roboter R nahezu jede beliebige Position erreichen kann.

Die beiden elastischen Hüllen 20, 30 stehen untereinander über (nicht dargestellte) Überströmöffnungen in Strömungsverbindung, so daß das die Umhüllung U durchströmende Luftmedium M von der inneren Hülle 20 in die äußere Hülle 30 strömen kann. Die Überströmöffnungen können beispielsweise in der die innere Hülle 20 am freien Ende 3 des Roboterarms 2 tragende Flanschscheibe eingebracht sein. Letztere ist hierzu mit Durchbrüchen versehen oder als Speichenrad ausgebildet. Je nach gewünschtem Staudruck innerhalb der Hüllen kann man zusätzlich oder alternativ Durchbrüche in der oberen oder seitlichen Begrenzungsfläche 23 der inneren Hülle 20 vorsehen. Wichtig hierbei ist, daß die Durchbrüche in einem räumlich begrenzten Bereich 22 der inneren Hülle 20 angeordnet sind, so daß sich innerhalb der doppelwandigen Umhüllung U zwei entgegengesetzte Strömungen S ausbilden können. Die Größe wird derart bemessen, daß sich innerhalb der Umhüllung U eine ausreichende Strömungsgeschwindigkeit einstellen kann. Die Überströmöffnungen in der Hülle 20 selbst können als einfache Löcher ausgebildet sein.

Die in der Umhüllung U als Strömungsmedium M befindliche Luft wird mittels eines im Wärmetauscher W angeordneten (nicht dargestellten) Gebläses in Strömung versetzt. Dabei gelangt die Luft M zunächst über die Zuführleitung 42 und das Zuluftrohr 56 in die Zuluftkammer 55 des Sockelgehäuses 50 und von dort aus in die innere Hülle 20. Der in der Zuluftkammer 55 und der inneren Hülle 20 befindliche Roboter R wird gleichmäßig von der Luft M umströmt und auf deren Temperatur erwärmt oder gekühlt, je nach dem erforderlichen Temperaturausgleich. Anschließend gelangt die Luft M durch die Überströmöffnungen hindurch in die äußere Hülle 30 und von dieser aus über die Abluftkammer 57 und das Abluftrohr 58 in die Abführleitung 44, welche die Luft M in den Wärmetauscher W zurückführt. Der in den Umhüllungen 20, 52 und 30, 54 entstehende Staudruck hält die elastischen Hüllen 20, 30 auf der erforderlichen Distanz, ohne daß zusätzliche Abstützungs- oder Befestigungsmittel eingesetzt werden müssen. Da das gesamte Hüllen-System 20, 30, 50 an allen drehbaren und starren Verbindungs- sowie Übergangsstellen nach außen luftdicht abgedichtet ist, kann keine Luft nach außen dringen und die dort erzeugten Klimabedingungen beeinträchtigen.

Der Wärmetauscher W arbeitet nach dem Gegenstromprinzip, d.h. der den Wärmetauscher W durchströmenden Luft M wird mittels eines Trägermediums T Energie zugeführt oder abgeführt. Das Trägermedium T wiederum wird in der Kühl- und/oder "Heizvorrichtung HK aufbereitet und über die Verbindungsleitungen 46 dem Wärmetauscher W zu bzw. abgeführt. Innerhalb des Wärmetauschers W wird die Luft M mittels des Trägermediums T, beispielsweise Wasser/Ethylenglykol, auf die erforderliche Temperatur gebracht und durch das Gebläse ständig der Innenhülle 20 zugeführt. Auf diese Weise wird der Roboter R, unabhängig von den in der Klimakammer K herrschenden Temperaturen, auf einer seinem Betriebstemperaturbereich entsprechenden Temperatur gehalten, wobei die äußere Umhüllung 30 dafür sorgt, daß die in der Klimakammer K erzeugten Bedingungen nicht oder nur unmerklich beeinflußt werden.

Man erkennt, daß die Kühl- und/oder Heizvorrichtung HK räumlich getrennt von dem Wärmetauscher W ausgebildet ist und entsprechend unabhängig von den übrigen Komponenten aufgestellt werden kann. Dies ist insbesondere dann von Vorteil, wenn der Roboter R mit der Umhüllung U beispielsweise auf dem Fahrersitz eines Fahrzeugs eingebaut werden muß, um das vollständige Fahrzeug innerhalb der Klimakammer K zu testen. Die Verbindungsleitungen 42, 44 zum Wärmetauscher W sind dann relativ kurz gehalten, so daß diese weder den Einbau noch die Bewegungen des Roboters R behindern, während die Leitungen 46 zwischen Wärmetauscher W und dem Kühl-Heiz-Mobil KH erheblich länger ausgebildet sein können, z.B. bis zu 10 m. Geeignete Isolierungen der Leitungen 42, 44, 46 sorgen dafür, daß die Energieverluste gering bleiben.

Die Erfindung ist nicht auf eine der vorbeschriebenen Ausführungsformen beschränkt, sondern in vielfältiger Weise abwandelbar. So kann der Wärmetauscher W je nach Anforderungen an die Abmessungen der Vorrichtung 10 auch unmittelbar in dem Sockelgehäuse 50 integriert sein. Oder man kombiniert den Wärmetauscher W und die Kühl- bzw. Heizvorrichtung KH in einem gemeinsamen Gehäuse. Ferner ist es möglich, den Überströmbereich 22 bzw. die Überströmöffnungen in der Größe veränderbar auszubilden, beispielsweise um die Volumenströmungen S oder den Staudruck in der Umhüllung U zu regeln. Auch ist es möglich, die erste Umhüllung 20 als Gehäuse oder Gehäuseteil des Roboters R auszubilden. Eine weitere Alternative sieht vor, daß die innere und/oder die äußere Umhüllung 20, 30 nicht nur im Bereich des Drehsockels 4, sondern auch in Bereichen des Roboterarms 2 zumindest abschnittsweise starr ausgebildet und über doppelwandige Drehverbindungen miteinander verbunden sind.

Um einen herkömmlichen Roboter R innerhalb einer Klimakammer K und/oder unter extremen Temperaturbedingungen einsetzen zu können, hat man gesehen, daß der Roboter R mit zwei Schutzhüllen 20, 30 ummantelt und mit geregelten Luftströmungen M, S temperiert wird. Die Volumenströme in und aus den Hüllen 20, 30 werden über ein spezielles Sockelgehäuse 50 mit integrierten Luftführungen 55, 56; 57, 58 geführt. Damit die Hüllen 20, 30 den Roboterbewegungen folgen und diese nicht behindern können, ist ein doppelwandiges Drehflanschsystem 64 vorgesehen, welches die Hüllen 20, 30 gegenüber dem Sockelgehäuse 50 luftdicht abdichtet.

Die Schutzhüllen-Konstruktion U basiert folglich auf einem Zwei-Hüllen-Konzept. Zwischen einer Innenhülle 20 und der Roboteroberfläche strömt die Zuluft von dem Sockelgehäuse 50 zum freien Ende 3 des Roboterarms 2 (Roboterhand), an der ein Effektor anbringbar ist. Dort wird die Luft vorzugsweise über ein weiteres Drehflanschsystem in die Außenhülle 30 übergeführt und strömt zwischen dieser und der Innenhülle 20 zurück in das Sockelgehäuse 50 und von dort zur thermischen Aufbereitung in den Wärmetauscher W. Die Luft Zu- und Abführung wird über die Leitungen 42, 44 "erreicht, die einen Durchmesser von 160 mm haben können.

Wesentliche Vorteile der Erfindung beruhen darauf, daß ein herkömmlicher Roboter R mit gewöhnlichem Betriebstemperaturbereich mittels der Vorrichtung 10 auch unter extremen Bedingungen innerhalb einer Klimakammer K eingesetzt werden kann. Die Hüllen 20, 30 lassen sich problemlos den Konturen des Roboters R bzw. des Roboterarms 2 anpassen, während das Sockelgehäuse 50 von der Größe her derart dimensionierbar ist, daß Roboter R verschiedenster Bauarten darin einsetzbar sind.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- A: Achse
- K: Klimakammer
- KH: Kühl- und/oder Heizvorrichtung
- M: Strömungsmedium
- R: Roboter
- s: Strömungsrichtung
- T: Trägermedium
- U: Umhüllung
- V: Vertikalachse
- W: Wärmetauscher

- 2: Roboterarm
- 3: freies Ende
- 4: Drehsockel
- 5: Kupplung

- 10: Klima-Vorrichtung
- 20: erste Hülle
- 22: Überströmbereich
- 23: Rand- und/oder Endbereich
- 30: zweite Hülle

- 42: Zuführleitung
- 44: Abführleitung
- 46: Leitung

- 50: Sockelgehäuse
- 51: Boden
- 52: Innenwandung
- 54: Außenwandung
- 55: Zuluftkammer
- 56: Zuluftrohr
- 57: Abluftkammer
- 58: Abluftrohr
- 61: Rückwand
- 62: Rohrdurchführung
- 64: Drehflansch
- 65: Innenflansch
- 66: Außenflansch
- 67: Gleitringdichtung
- 68: Ringdeckel
- 69: Durchbrüche

## Patentansprüche

1. Verfahren zur Klimatisierung von Robotern (R), bei welchem
a) jeder Roboter (R) innerhalb einer ersten Umhüllung (20) von einem Strömungsmedium (M) umströmt wird,
b) das Strömungsmedium (M) von der ersten Umhüllung (20) in eine diese umgebende zweite Umhüllung (30) geleitet wird,
c) die erste Umhüllung (20) innerhalb der zweiten Umhüllung (30) von dem Strömungsmedium (M) umströmt wird,
d) das Strömungsmedium (M) aus der zweiten Umhüllung (30) abgeführt wird, und
e) das aus der zweiten Umhüllung (30) abgeführte Strömungsmedium (M) auf eine im Bereich der Betriebstemperatur des zu klimatisierenden Roboters (R) liegende Temperatur gebracht und anschließend in die erste Umhüllung (20) zurückgeleitet wird,
**dadurch gekennzeichnet, daß**
f) das Strömungsmedium (M) vor dem Einströmen in die erste Umhüllung (20) in einem Wärmetauscher (W) auf die im Bereich der Betriebstemperatur des zu klimatisierenden Roboters (R) liegende Temperatur gebracht wird, und
g) daß der Wärmetauscher (W) zur Einstellung der Temperatur des Strömungsmediums (M) mit einem gasförmigen oder flüssigen Trägermedium (T) beaufschlagt wird,
h) wobei das Trägermedium (T) in einer von dem Wärmetauscher (W) separaten Kühl- und/oder Heizvorrichtung (KH) auf eine für die Einstellung der Temperatur des Strömungsmediums (M) erforderliche Temperatur gebracht wird.

2. Verfahren nach Anspruch 1, **dadurch gekennzeichnet, daß** die Strömungsrichtung (S) des Strömungsmediums (M) in der ersten Umhüllung (20) und die Strömungsrichtung (S) des Strömungsmediums (M) in der zweiten Umhüllung (30) im wesentlichen entgegengesetzt verlaufen.

3. Verfahren nach Anspruch 1 oder 2, **dadurch gekennzeichnet, daß** das Strömungsmedium (M) in zumindest einem räumlich begrenzten Überströmbereich (22) von der ersten Umhüllung (20) in die zweite Umhüllung (30) übergeführt wird.

4. Verfahren nach Anspruch 3, **dadurch gekennzeichnet, daß** der Überströmbereich (22) in einem Rand- und/oder Endbereich (23) der ersten Umhüllung (20) liegt.

5. Verfahren nach Anspruch 3 oder 4, **dadurch gekennzeichnet, daß** der Überströmbereich (22) im Bereich eines an den Roboter (R) anschließbaren Effektors liegt.

6. Verfahren nach einem der Ansprüche 1 bis 5, **dadurch gekennzeichnet, daß** der Überströmbereich (22) in der Größe veränderbar ist.

7. Verfahren nach einem der Ansprüche 1 bis 6, **dadurch gekennzeichnet, daß** das Strömungsmedium (M) Luft ist.

8. Vorrichtung zum Klimatisieren von Robotern (R) mit einer jeden Roboter (R) umgebenden ersten Umhüllung (20) und mit einer die erste Umhüllung (20) umgebenden zweiten Umhüllung (30), wobei die erste Umhüllung (20) in wenigstens einem räumlich begrenzten Bereich (22) Überströmöffnungen aufweist, durch die ein den bzw. die Roboter (R) innerhalb der ersten Umhüllung (20) umströmendes Strömungsmedium (M) von der ersten Umhüllung (20) in die zweite Umhüllung (30) gelangt, **dadurch gekennzeichnet, daß**
die Vorrichtung eine Zuführleitung (22), einen Wärmetauscher (W), eine Abführleitung (44), ein gasförmiges oder flüssiges Trägermedium (T) und eine von dem Wärmetauscher (W) separate Kühl- und/oder Heizvorrichtung (HZ) aufweist,
a) wobei das der ersten Umhüllung (20) über die Zuführleitung (42) zuführbare Strömungsmedium (M) mittels des Wärmetauschers (W) auf eine im Bereich der Betriebstemperatur des zu klimatisierenden Roboters (R) liegende Temperatur bringbar ist,
b) **daß** das innerhalb der zweiten Umhüllung (30) die erste Umhüllung (20) umströmende Strömungsmedium (M) aus der zweiten Umhüllung (30) über die Abführleitung (44) abführbar und über den Wärmetauscher (W) und die Zuführleitung (42) der ersten Umhüllung (20) zuführbar ist,
c) daß der Wärmetauscher (W) zur Einstellung der Temperatur des Strömungsmediums (M) mit dem gasförmigen oder flüssigen Trägermedium (T) beaufschlagbar ist, und
d) daß das Trägermedium (T) in der von dem Wärmetauscher (W) separaten Kühl-und/oder Heizvorrichtung (KH) auf eine für die Einstellung der Temperatur des Strömungsmediums (M) erforderliche Temperatur bringbar ist.

9. Vorrichtung nach Anspruch 8, **dadurch gekennzeichnet, daß** die Überströmöffnungen (22) in einem Rand- und/oder Endbereich (23) der ersten Umhüllung (20) liegen.

10. Vorrichtung nach Anspruch 8 oder 9, **dadurch gekennzeichnet, daß** die Überströmöffnungen im Bereich eines an den Roboter (R) anschließbaren Effektors liegt.

11. Vorrichtung nach Anspruch 10, **dadurch gekennzeichnet, daß** der Effektor außerhalb der Umhüllungen (20. 30) liegt.

12. Vorrichtung nach einem der Ansprüche 8 bis 11, **dadurch gekennzeichnet, daß** die Strömungsrichtung (S) des Strömungsmediums (M) in der ersten Umhüllung (20) und die Strömungsrichtung (S) des Strömungsmediums (M) in der zweiten Umhüllung (30) im wesentlichen entgegengesetzt gerichtet sind.

13. Vorrichtung nach einem der Ansprüche 8 bis 12, **dadurch gekennzeichnet, daß** der Wärmetauscher (W) und die Kühl- und/oder Heizvorrichtung (KH) über Leitungen (46) miteinander verbunden sind.

14. Vorrichtung nach einem der Ansprüche 8 bis 13, **dadurch gekennzeichnet, daß** innerhalb der Zuführ- oder Abführleitung (42, 44) oder innerhalb des Wärmetauschers (W) ein Gebläse, ein Ventilator o.dgl. vorgesehen ist.

15. Vorrichtung nach einem der Ansprüche 8 bis 14, **dadurch gekennzeichnet, daß** die Umhüllungen (20, 30) zumindest abschnittsweise aus einem elastischen Material gefertigt sind.

16. Vorrichtung nach Anspruch 15, **dadurch gekennzeichnet, daß** die Umhüllungen (20, 30) an die Bewegung des Roboters (R) gekoppelt sind.

## Claims

1. Method for temperature controlling of robots (R), in which
a) each robot (R) is surrounded by a flow medium (M) circulating inside a first enclosure (20),
b) the flow medium (M) is directed from the first enclosure (20) into a second enclosure (30) surrounding said first enclosure (20),
c) the first enclosure (20) is surrounded by the flow medium (M) circulating inside the second enclosure (30),
d) the flow medium (M) is discharged from the second enclosure (30), and
e) the flow medium (M) discharged from the second enclosure (30) is heated to a temperature in the range of the operating temperature of the robot (R) the temperature of which is to be controlled, and subsequently directed back into the first enclosure (20),
**characterised in**
f) that prior to its flowing into the first enclosure (20), the flow medium (M) is heated to the temperature in the range of the operating temperature of the robot (R) the temperature of which is to be controlled, and
g) that the heat exchanger (W) is charged with a gaseous or liquid carrier medium (T) in order to adjust the temperature of the flow medium (M),
h) wherein the carrier medium (T) is heated, inside a cooling and/or heating device (KH) separate from the heat exchanger (W), to a temperature required for adjusting the temperature of the flow medium (M).

2. Method according to claim 1, **characterised in that** the flow direction (S) of the flow medium (M) in the first enclosure (20) and the flow direction (S) of the flow medium (M) in the second enclosure (30) are substantially opposed to each other.

3. Method according to claim 1 or 2, **characterised in that** the flow medium (M) is transferred from the first enclosure (20) into the second enclosure (30) in at least one spatially defined overflow area (22).

4. Method according to claim 3, **characterised in that** the overflow area (22) is disposed in a marginal and/or end region (23) of the first enclosure (20).

5. Method according to claim 3 or 4, **characterised in that** the overflow area (22) is disposed in the region of an effector adapted to be connected to the robot (R).

6. Method according to any one of claims 1 to 5, **characterised in that** the overflow area (22) is adapted to be modified in size.

7. Method according to any one of claims 1 to 6, **characterised in that** the flow medium (M) is air.

8. Device for temperature controlling of robots (R), with a first enclosure (20) surrounding each robot (R) and with a second enclosure (30) surrounding said first enclosure (20), wherein the first enclosure (20) has overflow holes in at least one spatially defined area (22) through which a flow medium (M) circulating in the first enclosure (20) around the robot or the robots (R) passes from the first enclosure (20) into the second enclosure (30), **caracterised in**
a) that said device has a feeding line (22), a heat exchanger (W), a discharge line (44), a gaseous or liquid carrier medium (T) and a cooling and/or heating device (HZ) separate from the heat exchanger (W), wherein the flow medium (M) which can be fed into the first enclosure (20) via the feeding line (42) is adapted to be heated by means of the heat exchanger (W) to a temperature in the range of the operating temperature of the robot (R) the temperature of which is to be controlled,
b) that the flow medium (M) circulating inside the second enclosure (30) around the first enclosure (20) is adapted to be discharged from the second enclosure (30) via the discharge line (44) and adapted to be fed into the first enclosure (20) via the heat exchanger (W) and the feeding line (42),
c) that the heat exchanger (W) is adapted to be charged with the gaseous or liquid carrier medium (T) in order to adjust the temperature of the flow medium (M), and
d) that the carrier medium (T) is adapted to be heated, inside the cooling and/or heating device (KH) separate from the heat exchanger (W), to a temperature required for adjusting the temperature of the flow medium (M).

9. Device according to claim 8, **characterised in that** the overflow holes (22) are disposed in a marginal and/or end region (23) of the first enclosure (20).

10. Device according to claim 8 or 9, **characterised in that** the overflow holes are disposed in the region of an effector adapted to be connected to the robot (R).

11. Device according to claim 10, **characterised in that** the effector is disposed outside of the enclosures (20, 30).

12. Device according to any one of claims 8 to 11, **characterised in that** the flow direction (S) of the flow medium (M) in the first enclosure (20) and the flow direction (S) of the flow medium (M) in the second enclosure (30) are substantially opposed to each other.

13. Device according to any one of claims 8 to 12, **characterised in that** the heat exchanger (W) and the cooling and/or heating device (KH) are connected to each other via lines (46).

14. Device according to any one of claims 8 to 13, **characterised in that** a blower, a fan, or similar, is provided inside the feeding or discharge line (42, 44) or inside the heat exchanger (W).

15. Device according to any one of claims 8 to 14, **characterised in that** the enclosures (20, 30) are at least sectionally made of an elastic material.

16. Device according to claim 15, **characterised in that** the enclosures (20, 30) are coupled to the movements of the robot (R).

## Revendications

1. Procédé pour la climatisation de robots (R), chez lequel
a) un milieu fluide (M) s'écoule autour de chaque robot (R) à l'intérieur d'une première enveloppe (20),
b) le milieu fluide (M) s'écoule depuis la première enveloppe (20) vers une seconde enveloppe (30) entourant la première,
c) le milieu fluide (M) s'écoule autour de la première enveloppe (20) à l'intérieur d'une seconde enveloppe (30),
d) le milieu fluide (M) est évacué de la seonde enveloppe (30), et
e) le milieu fluide (M) évacué de la seconde enveloppe (30) est amené à une température correspondant à la température de service du robot à climatiser (R), puis reconduit dans la première enveloppe (20),
**caractérisé**
f) en ce que le milieu fluide (M), avant d'entrer dans la première enveloppe (20), est amené dans un échangeur thermique (W) à la température correspondant à la température de service du robot à climatiser (R), et
g) en ce que l'échangeur thermique (W), pour le réglage de la température du milieu fluide (M), est alimenté avec un milieu porteur (T) gazeux ou liquide,
h) le milieu porteur (T) étant amené, dans un dispositif de refroidissement et/ou de chauffage (KH) distinct de l'échangeur thermique (W), à la température nécessaire au réglage de la température du milieu fluide (M).

2. Procédé selon la revendication 1, **caractérisé en ce que** la direction d'écoulement (S) du milieu fluide (M) dans la première enveloppe (20) et la direction d'écoulement (S) du milieu fluide (M) dans la seconde enveloppe (30) sont essentiellement opposées.

3. Procédé selon la revendication 1 ou 2, **caractérisé en ce que** le milieu fluide (M), dans au moins une zone de passage limitée (22), est conduit de la première enveloppe (20) vers la seconde enveloppe (30).

4. Procédé selon la revendication 3, **caractérisé en ce que** la zone de passage (22) se trouve dans une zone marginale et/ou terminale (23) de la première enveloppe (20).

5. Procédé selon la revendication 3 ou 4, **caractérisé en ce que** la zone de passage (22) se trouve à proximité d'un effecteur pouvant être monté sur le robot (R).

6. Procédé selon l'une des revendications 1 à 5, **caractérisé en ce que** l'étendue de la zone de passage (22) est variable.

7. Procédé selon l'une des revendications 1 à 6, **caractérisé en ce que** le milieu fluide (M) est de l'air.

8. Dispositif pour la climatisation de robots (R), avec une première enveloppe (20) entourant chaque robot (R) et avec une seconde enveloppe (30) entourant la première enveloppe (20), la première enveloppe (20) disposant dans au moins une zone limitée (22) d'ouvertures de passage, par lesquelles un milieu fluide (M) s'écoulant autour du ou des robots (R) à l'intérieur de la première enveloppe (20) parvient de la première enveloppe dans la seconde enveloppe (30), **caractérisé en**
a) ce que le dispositif dispose d'une conduite d'alimentation (42), d'un échangeur thermique (W), d'une conduite d'écoulement (44), d'un milieu porteur (T) gazeux ou liquide et d'un dispositif de refroidissement et/ou de chauffage (KH) distinct de l'échangeur thermique (W), alors que le milieu fluide (M) pouvant être conduit dans la première enveloppe (20) par la conduite d'alimentation (42) peut être amené au moyen de l'échangeur thermique (W) à une température correspondant à la température de service du robot à climatiser (R),
b) en ce que le milieu fluide (M) s'écoulant à l'intérieur de la seconde enveloppe (30) autour de la première enveloppe (20) peut s'écouler de la seconde enveloppe (30) par la conduite d'écoulement (44) et être conduit dans la première enveloppe (20), en passant par l'échangeur thermique (W) et la conduite d'alimentation (42),
c) en ce que l'échangeur thermique (W), pour le réglage de la température du milieu fluide (M), peut être alimenté avec le milieu porteur (T) gazeux ou liquide, et
d) en ce que le milieu porteur (T), dans le dispositif de refroidissement et/ou de chauffage (KH) distinct de l'échangeur thermique (W), peut être amené à une température nécessaire au réglage de la température du milieu fluide (M).

9. Dispositif selon la revendication 8, **caractérisé en ce que** les ouvertures de passage (22) sont situées dans une zone marginale et/ou terminale (23) de la première enveloppe (20).

10. Dispositif selon la revendication 8 ou 9, **caractérisé en ce que** les ouvertures de passage se trouvent à proximité d'un effecteur pouvant être monté sur le robot (R).

11. Dispositif selon la revendication 10, **caractérisé en ce que** l'effecteur se trouve à l'extérieur des enveloppes (20, 30).

12. Dispositif selon l'une des revendications 8 à 11, **caractérisé en ce que** la direction d'écoulement (S) du milieu fluide (M) dans la première enveloppe (20) et la direction d'écoulement (S) du milieu fluide (M) dans la seconde enveloppe (30) sont essentiellement opposées.

13. Dispositif selon l'une des revendications 8 à 12, **caractérisé en ce que** l'échangeur thermique (W) et le dispositif de refroidissement et/ou de chauffage (KH) sont reliés par des conduites (46).

14. Dispositif selon l'une des revendications 8 à 13, **caractérisé en ce qu'**à l'intérieur de la conduite d'alimentation ou d'écoulement (42, 44) ou à l'intérieur de l'échangeur thermique (W), il a été prévu d'installer une soufflerie, un ventilateur ou autres.

15. Dispositif selon selon l'une des revendications 8 à 14, **caractérisé en ce qu'**au moins par sections, les enveloppes (20, 30) sont faites d'un matériau élastique.

16. Dispositif selon la revendication 15, **caractérisé en ce que** les enveloppes (20, 30) sont jumelées au mouvement du robot (R).
